# EUROPEAN PATENT APPLICATION

(11) **EP 4 180 988 A1**
(43) Date of publication of application: **17.05.2023**
(21) Application number: 20944203.7
(22) Date of filing: 21.12.2020
(51) Int. Cl.: G06F 16/27

(54) **HTAP DATABASE BASED ON CONSENSUS ALGORITHM**

(30) Priority: 08.07.2020 CN 202010654486
(71) Applicant: Pingcap Xingchen (Beijing) Technology Co., Ltd., Beijing 100018 (CN)
(72) Inventor: LIU, Qi, Beijing 100018 (CN); HUANG, Dongxu, Beijing 100018 (CN); CUI, Qiu, Beijing 100018 (CN); FANG, Zhuhe, Beijing 100018 (CN)
(74) Representative: Ipsilon
(86) International application number: PCT/CN2020/137984
(87) International publication number: WO 2022/007339

(57) **Abstract**

An HTAP database based on a consensus algorithm is provided. The HTAP database comprises a row-column hybrid store distributed storage system and a distributed SQL execution engine. The row-column hybrid store distributed storage system includes a row store bank and a column store bank, where data stored in the column store bank is a subset of data stored by the row store. The distributed SQL execution engine is used to receive transactional and/or analytical requests sent by a client, and to access the row store bank while executing the transactional requests and access the column store bank while executing the analytical requests, thus ensuring the isolation of the transactional and analytical requests to achieve load isolation, ensuring freshness and consistency of the data, and also ensuring high scalability and availability of the system.

## Description

### CROSS-REFERENCE TO RELATED APPLICATION(S)

The present disclosure claims priority to Chinese Patent Application No. 2020106544866, filed to the China National Intellectual Property Administration (CNIPA) on July 8, 2020, entitled " HTAP DATABASE BASED ON CONSENSUS ALGORITHM", the entire contents of which are incorporated herein by reference.

### TECHNICAL FIELD

The present disclosure relates to the field of databases, and in particular, to an HTAP database based on a consensus algorithm.

### BACKGROUND

A traditional database cannot simultaneously cope with the challenges of high concurrent transactions, fast analysis, and massive data management of big data in internet applications, so it is divided into an On-Line Transactional Processing (simply referred to as OLTP) system and an On-Line Analytical Processing (simply referred to as OLAP) system. The OLTP system supports high concurrent transactions, and guarantees high availability, transaction consistency, and high scalability. The OLAP system analyzes data fast, but the data analyzed by the OLAP system is not real time data. However, fresh data has higher business value, which needs to simultaneously process high concurrent transactions and analyze the data in real time, i.e., to support Hybrid Transactional/Analytical Processing (simply referred to as HTAP). An HTAP system is capable of analyzing data generated from transaction processing in real time and has the above-mentioned advantages of both the OLTP system and the OLAP system.

The practice in related art is to link the OLTP and OLAP systems together through an Extract-Transform-Load (simply referred to as ETL) process, whereby the OLTP system periodically imports the latest batch of data into the OLAP system for analysis. However, this ETL process usually takes several hours or even several days to complete and cannot guarantee real time analysis. Meantime, there is no global consistency model between multiple systems, and maintaining multiple systems introduces higher maintenance and management costs.

To ensure data freshness, some Main Memory Databases (e.g., HyPer, SAP HANA, and MemSQL) allow reading the latest data from local transaction processing, but these Main Memory Databases cannot provide high performance of both OLTP and OLAP, because OLAP severely affects the performance of OLTP to an extent that can be evaluated by such HTAP test sets as CH-benCHmark. It has been documented that, by running CH-benCHmark tests, the peak of OLTP loads that HyPer processes is reduced by at least five times, while the peak of SAP HANA's OLTP capabilities is reduced by at least three times, because OLTP and OLAP access the same replica data at the same time and thus inevitably compete for resources.

To avoid resource competition, a database system has to provide different replicas of data for the OLTP and OLAP loads. Multiple replicas are configured to different machines, thus isolating interference between the OLTP and OLAP loads. However, maintaining the consistency of multiple replicas in real time is a problem that has to be solved. BatchDB and SAP HANA ATR maintain replica data consistency by replicating transaction logs from an OLTP master replica to an OLAP slave replica through an approach of master-slave replication. However, this customized replication approach is prone to encounter data inconsistency anomalies and does not consider the availability and scalability of the system.

### SUMMARY

A main purpose of the present disclosure is to provide an HTAP database based on consensus algorithm, to address the inability of existing database systems to simultaneously satisfy supports for load isolation, data freshness, data consistency, high availability, and scalability.

In order to achieve the above purpose, according to a first aspect of the present disclosure, there is provided a consensus algorithm-based HTAP database, the HTAP database comprising a row-column hybrid store distributed storage system and a distributed SQL execution engine;
the row-column hybrid store distributed storage system includes a row store bank and a column store bank, where data stored in the column store bank is a subset of data stored by the row store;
the distributed SQL execution engine is used to receive transactional and/or analytical requests sent by a client, and to access the row store bank while executing the transactional requests and access the column store bank while executing the analytical requests;
optionally, the row store bank includes chunks and consensus groups, and the column store bank includes shards and learners;
the shards and the learners store the data in a column-store format, the data with the column-store format is obtained by converting the format in a local replication state machine after asynchronously replicating the data in the row store bank in accordance with a replication state machine mechanism by the consensus groups.

Further, the consensus groups include at least three replicas of the chunks, the replicas are obtained by performing majority replication on data in the chunks using a consensus algorithm in accordance with the replication state machine mechanism, the replicas storing the data in a row-store format.

Further, one of the shards in the column store bank corresponds to one or multiple consecutive ones of the chunks in the row store;
one of the learners in the column store bank corresponds to one or multiple consecutive ones of the consensus groups in the row store;
one of the shards in the column store bank is configured as one or more of the learners in the column store bank.

Further, the chunk is obtained by partitioning table data in the row store bank in a range partitioning manner, and the shard is obtained by partitioning table data in the column store bank in the range partitioning manner.

Further, the range partitioning manner comprises:
partitioning the chunk if the amount of data or accesses of the chunk is greater than the maximum of a preset range, and the amount of data or accesses of each chunk after the partitioning is greater than the minimum of the preset range;
merging the chunk with a chunk contiguous to the chunk if the amount of data or accesses of the chunk is less than the minimum of the preset range, and the amount of data or accesses of the merged chunk is less than the maximum of the preset range.

Optionally, the distributed SQL execution engine is further used to access the column store bank while executing the transactional requests and access the row store bank while executing the analytical requests.

Further, the distributed SQL execution engine accesses a different column store bank than the analytical requests while executing the transactional requests.

Further, the distributed SQL execution engine accesses a preset amount of data in the row store bank while executing the analytical requests.

Optionally, the number of the analytical requests that the column store bank responds to is more than the number of the transactional requests, and the number of the transactional requests that the row store bank responds to is more than the number of the analytical requests;
the number of the analytical requests that the column store bank responds to is more than the number of the analytical requests that the row store bank responses to, and the number of the transactional requests that the row store bank responds to is more than the number of the analytical requests that the column store bank responds to.

The HTAP database based on a consensus algorithm provided by the present disclosure comprises a row-column hybrid store distributed storage system and a distributed SQL execution engine, the row-column hybrid store distributed storage system includes a row store bank and a column store bank, where data stored in the column store bank and the row store bank being the same. The distributed SQL execution engine is used to receive transactional and/or analytical requests sent by a client, and to dispatch the transactional requests to the row store bank and the analytical requests to the column store bank. The load isolation is achieved by introducing a column store bank with the same data stored by the row store bank and then dispatching the transactional and analytical requests to different machines for execution.

### BRIEF DESCRIPTION OF THE DRAWINGS

In order to illustrate technical solutions more clearly in specific embodiments and prior art of the present disclosure, the accompanying drawings used in describing the specific embodiments and prior art will be briefly introduced below. Obviously, the accompanying drawings in the following description are merely some embodiments of the present disclosure, and for one of ordinary skill in the art, other accompanying drawings may be obtained based on these drawings without creative work.
FIG. 1 is a diagram of an architecture of an HTAP database system provided by an embodiment of the present disclosure;
FIG. 2 is a diagram of a replication mechanism provided by an embodiment of the present disclosure; and
FIG. 3 is a diagram of a distributed storage logic relationship provided by an embodiment of the present disclosure.

### DETAILED DESCRIPTION

In order to enable those skilled in the art to better understand the inventive scheme, technical solutions in embodiments of the present disclosure will be clearly and completely described below in conjunction with the accompanying drawings in the embodiments of the present disclosure, and it is obvious that the embodiments described are merely some of the embodiments of the present disclosure, and not all of them. Based on the embodiments in the present disclosure, all other embodiments obtained by one of ordinary skill in the art without creative work shall fall within the scope of protection of the present disclosure.

It is to be noted that the terms "first", "second", etc. in the specification and claims of the present disclosure and the above-mentioned drawings are used to distinguish similar objects, and are not necessarily used to describe a particular order or sequence. It should be understood that data thus used may be interchangeable, where appropriate, for the purposes of the embodiments of the disclosure described herein. In addition, the terms "comprises" and "has", and any variations thereof, are intended to cover non-exclusive inclusion, e.g., a process, method, system, product, or apparatus comprising a series of steps or units need not be limited to those steps or units clearly listed, but may include other steps or units not clearly listed or inherent to those processes, methods, products, or apparatuses.

In the present disclosure, the terms "install," "set," "provided with," "connect," "connected," "snapped," are to be understood in a broad sense. For example, it may be a fixed connection, a removable connection, or a monolithic construction; it may be a mechanical connection, or an electrical connection; it may be a direct connection, or an indirect connection through an intermediate medium, or an internal connection between two devices, components, or parts. For one of ordinary skill in the art, specific meanings of the above terms in the context of the present disclosure may be understood depending on specific situations.

It is to be noted that the embodiments and features in the embodiments of the present disclosure may be combined with each other without conflicts. The present disclosure will be described in detail below with reference to the accompanying drawings and in connection with the embodiments.

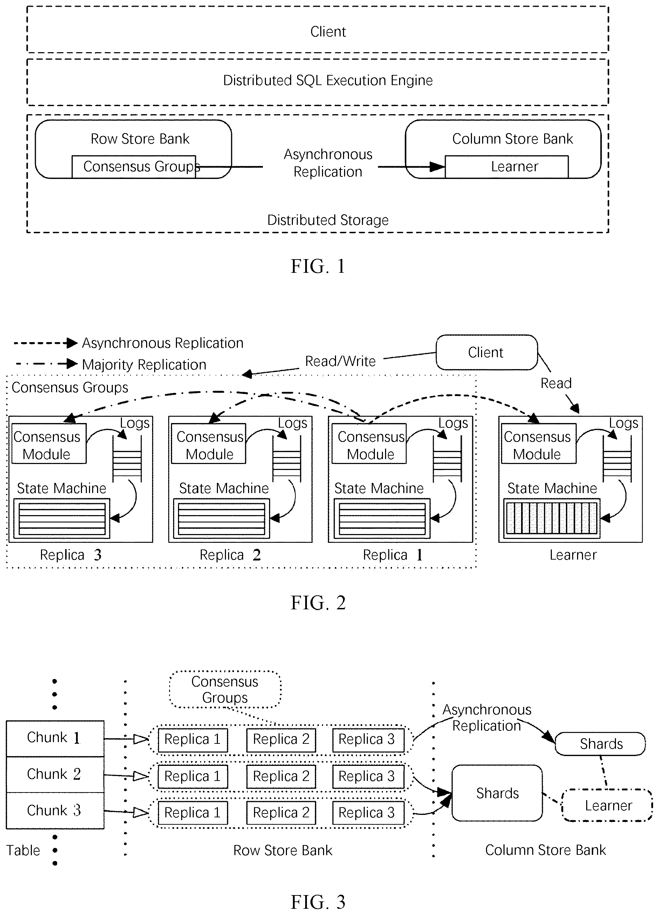

According to an embodiment of the present disclosure, there is provided an HTAP database based on a consensus algorithm, with a system architecture as shown in FIG. 1, the HTAP database comprising a row-column hybrid store distributed storage system and a distributed SQL execution engine;
the row-column hybrid store distributed storage system includes a row store bank and a column store bank, where data stored in the column store bank is a subset of data stored in the row store bank.

Specifically, the data stored in the column store bank may be configured, according to actual needs, to be the same as or part of the content of the data stored by the row store bank, and the data stored in the column store bank and the row store bank have different formats; both the row store bank and the column store bank can be included in the same HTAP database, in order to avoid unnecessary ETL processes, simplify software stacks, save maintenance, operation, and maintenance costs, reduce technical risks caused by complex software architectures, and improve the utilization efficiency of data resources.

The distributed SQL execution engine is used to receive transactional and/or analytical requests sent by a client, and to access the row store bank while executing the transactional requests, and access the column store bank while executing the analytical requests.

Specifically, the distributed SQL execution engine receives the transactional requests sent by the client and dispatches them to a machine where the row store bank is located, and receives the analytical requests sent by the client and dispatches them to a machine where the column store bank is located, while receiving both the transactional and analytical requests sent by the client and dispatching each of them to the machine where the row store bank is located or the machine where the column store bank is located, respectively. The transactional requests include read requests and write requests, the analytical requests include read requests, and different requests are dispatched to the machines where the different banks are located, in order to isolate the transactional and analytical requests, ensure the isolation of OLTP and OLAP queries to achieve resource and load isolation, and also ensure the write and read efficiency of OLTP and OLAP loads.

Among others, the row store bank includes chunks and consensus groups, and the column store bank includes shards and learners.

The shards and the learners store the data in a column-store format, the data with the column-store format is obtained by converting the format in a local replication state machine after asynchronously replicating the data in the row store bank in accordance with a replication state machine mechanism by the consensus groups.

Specifically, the learners are obtained after asynchronously replicating the data in the row store bank in accordance with the replication state machine mechanism and converting formats of the data to the column-store format by the consensus groups. The consensus groups asynchronously replicate logs in replicas of the row store bank to the learners in accordance with the replication state machine mechanism, the learners convert the data with a row-store format in the logs into the data with the column-store format, and store the data with that column-store format in the replication state machine. By the asynchronous replication performed by the consensus groups, the time consumed for data synchronization is controlled to be within a second level, thus ensuring freshness of the data.

The HTAP database includes a row-column hybrid store distributed storage system and a distributed SQL execution engine, the distributed storage system includes a row store bank and a column store bank, the row store bank includes consensus groups, the column store bank includes learners, and data in the learners is obtained by asynchronously replicating data in the consensus groups and converting formats of the data. The distributed SQL execution engine dispatches data query requests sent by a client to different machines where the different stores are located, specifically, by mainly dispatching transactional requests to a machine where the row store bank is located for execution and dispatching analytical requests to a machine where the column store bank is located for execution.

The replication mechanism provided by the embodiment of the present disclosure is shown in Fig. 2, where the logs are replicated to replica 1, replica 2 and replica 3 by performing a majority replication using a consensus algorithm through a consensus module, with the logs of each replica being in the same order and with the logs producing the same results after being applied locally. The logs are replicated to the majority of replicas in a consensus group before they are committed, and then returned to the client, where the committed data can be read by read requests, and read and write operations can be configured with different isolation levels, such as snapshot isolation. The replication state machine in each replica stores data in the row-store format and uses the consensus algorithm to maintain multi-replica consistency, which ensures high availability of the system. The consensus groups use the consensus algorithm to asynchronously replicate a replica by the consensus module in accordance with the replication state machine mechanism, to replicate the data with the row-store format in the logs to the learners, and the replication state machine converts the data with the row-store format into the data with the column-store format and stores it.

Among others, the consensus groups include at least three replicas of the chunks, the replicas are obtained by performing majority replication on data in the chunks using a consensus algorithm in accordance with the replication state machine mechanism, the replicas storing the data in a row-store format.

Specifically, the data in each chunk is replicated to at least three replicas by using the consensus algorithm in accordance with the replication state machine mechanism, thus maintaining multi-replica consistency and ensuring high availability of the system.

Among others, one of the shards in the column store bank corresponds to one or multiple consecutive ones of the chunks in the row store;
one of the learners in the column store bank corresponds to one or multiple consecutive ones of the consensus groups in the row store;
one of the shards in the column store bank is configured as one or more of the learners in the column store bank.

The chunk is obtained by partitioning table data in the row store bank in a range partitioning manner, and the shard is obtained by partitioning table data in the column store bank in the range partitioning manner.

Specifically, table data in the row store bank is partitioned into multiple chunks to ensure high scalability of the system.

Among others, the range partitioning manner comprises:
partitioning the chunk if the amount of data or accesses of the chunk is greater than the maximum of a preset range, and the amount of data or accesses of each chunk after the partitioning is greater than the minimum of the preset range;
merging the chunk with a chunk contiguous to the chunk if the amount of data or accesses of the chunk is less than the minimum of the preset range, and the amount of data or accesses of the merged chunk is less than the maximum of the preset range.

Specifically, the number of accesses of the chunk includes the number of data query requests accessing the chunk and the amount of data when the data query requests accessing the chunk, and a preset range of the amount of data or accesses can be set or adjusted according to the load of the system, for example, the preset range of the amount of data is set to 1 MB-1 GB.

The distributed storage logical relationship provided by the embodiment of the present disclosure is shown in FIG. 3. The table data is divided into multiple chunks to ensure high scalability of the system. A majority replication is performed on each chunk by using a consensus algorithm in accordance with a replication state machine mechanism to replicate data in the chunk to at least three replicas, to ensure high availability of the system. All replicas of a chunk constitute a consensus group, and the consensus group asynchronously replicates in accordance with the replication state machine mechanism. Logs are replicated to the shards and learners and stored in a column-store format, and the shards perform playback of the logs, i.e., the shards parse out row-store data that have been submitted and convert the data with a row-store format into data with the column-store format to be stored locally, and then the data with the column-store format can be read. It should be noted that the diagram is a logical relationship diagram, where the chunks and shards in the diagram are logical concepts of a table and do not represent a specific storage location of the table data, where the data are stored in different replicas and learners in the row-store and the column-store.

Among others, the distributed SQL execution engine is further used to access the column store bank while executing the transactional requests and access the row store bank while executing the analytical requests.

The distributed SQL execution engine executes transactions in a two-phase commit manner and supports optimistic transactions as well as pessimistic transactions. A row store bank is primarily used to materialize transactional requests, and all modifications to the transactions are materialized into the row store. For data query requests that access each table, the row store bank provides two access paths: row scanning and index scanning, while a column store bank provides one access path. These three different access paths provide different sequential properties and costs, and a query optimizer may select these three access paths so that the same data query request will use different access paths for accessing different tables.

Specifically, the distributed SQL execution engine accesses a different column store bank than the analytical requests while executing the transactional requests;

the distributed SQL execution engine accesses a preset amount of data in the row store bank while executing the analytical requests.

The distributed SQL execution engine dispatches the transactional and analytical requests to be executed on different machines during execution, and it accesses the row store bank and the column store bank separately. This resource isolation can ensure that the transactional and analytical requests achieve high performance separately and reduce performance interference. Meantime, the transactional and analytical requests can access both the row store bank and the column store bank with guaranteed isolation. The transactional requests can access a separately set column store bank, so the separately set column store bank is separated from the column store bank accessed by the analytical requests to isolate the interference to the analytical requests. A preset amount of data in the row store bank is accessed when the analytical requests access the row store, with value of the preset amount of data being small and involving only a small range of data, and the value of the preset amount of data may be configured or adjusted according to actual needs so that the amount of data accessed by the analytical requests is limited to isolate interference to the transactional requests.

Specifically, the number of the analytical requests that the column store bank responds to is more than the number of the transactional requests, and the number of the transactional requests that the row store bank responds to is more than the number of the analytical requests;
the number of the analytical requests that the column store bank responds to is more than the number of the analytical requests that the row store bank responses to, and the number of the transactional requests that the row store bank responds to is more than the number of the analytical requests that the column store bank responds to.

From the above description, it can be seen that the present disclosure achieves the following technical effects:
The table data in the row store bank is partitioned into multiple chunks to ensure high scalability of the system. The consensus algorithm is used to replicate data in each chunk to at least three replicas, thus maintaining multi-replica consistency and ensuring high availability of the system. Both the row-store and the column store bank are included in the same HTAP database, in order to avoid unnecessary ETL processes, simplify software stacks, save maintenance, operation, and maintenance costs, reduce technical risks caused by complex software architectures, and improve the utilization efficiency of data resources. The consensus groups asynchronously replicate the data to the learners according to the replication state machine mechanism, the time consumed is controlled to be within a second level, thus ensuring the freshness of the data. Different requests are dispatched to the machines where the different stores are located for execution, in order to ensure the isolation of OLTP and OLAP queries to achieve resource and load isolation, and also ensure the write and read efficiency of OLTP and OLAP loads.

While the embodiments of the present disclosure are described in conjunction with the accompanying drawings, various modifications and variations can be made by those skilled in the art without departing from the spirit and scope of the present disclosure, and such modifications and variations all fall within the scope as defined by the appended claims.

## Claims

1. An HTAP database based on a consensus algorithm, **characterized in that** the HTAP database comprises a row-column hybrid store distributed storage system and a distributed SQL execution engine;
the row-column hybrid store distributed storage system comprises a row store bank and a column store bank, wherein data stored in the column store bank is a subset of data stored in the row store bank;
the distributed SQL execution engine is configured to receive transactional and/or analytical requests sent by a client, and to access the row store bank while executing the transactional requests and to access the column store bank while executing the analytical requests.

2. The HTAP database of claim 1, **characterized in that** the row store bank comprises chunks and consensus groups, and the column store bank comprises shards and learners;
the shards and the learners store data in a column-store format, the data in the column-store format is obtained by converting the format in a local replication state machine after asynchronously replicating the data in the row store bank in accordance with a replication state machine mechanism by the consensus groups.

3. The HTAP database of claim 2, **characterized in that** the consensus groups comprise at least three replicas of the chunks, the replicas are obtained by performing majority replication on data in the chunks using a consensus algorithm in accordance with the replication state machine mechanism, the replicas storing the data in a row-store format.

4. The HTAP database of claim 2, **characterized in that** one of the shards in the column store bank corresponds to one or multiple consecutive ones of the chunks in the row store bank;
one of the learners in the column store bank corresponds to one or multiple consecutive ones of the consensus groups in the row store bank;
one of the shards in the column store bank is configured as one or more of the learners in the column store bank.

5. The HTAP database of claim 4, **characterized in that** the chunk is obtained by partitioning table data in the row store bank in a range partitioning manner, and the shard is obtained by partitioning table data in the column store bank in the range partitioning manner.

6. The HTAP database of claim 5, **characterized in that** the range partitioning manner comprises:
partitioning the chunk if the amount of data or accesses of the chunk is greater than a maximum of a preset range, and the amount of data or accesses of each chunk after the partitioning is greater than a minimum of the preset range;
merging a chunk with a chunk contiguous to the chunk if the amount of data or accesses of the chunk is less than the minimum of the preset range, and the amount of data or accesses of the merged chunk is less than the maximum of the preset range.

7. The HTAP database of claim 1, **characterized in that** the distributed SQL execution engine is further configured to access the column store bank while executing the transactional requests and access the row store bank while executing the analytical requests.

8. The HTAP database of claim 7, **characterized in that** when executing the transactional requests, the distributed SQL execution engine accesses a column store bank different from the one accessed when executing the analytical requests.

9. The HTAP database of claim 7, **characterized in that** the distributed SQL execution engine accesses a preset amount of data in the row store bank while executing the analytical requests.

10. The HTAP database of claim 1, **characterized in that** the number of the analytical requests that the column store bank responds to is more than the number of the transactional requests, and the number of the transactional requests that the row store bank responds to is more than the number of the analytical requests;
the number of the analytical requests that the column store bank responds to is more than the number of the analytical requests that the row store bank responds to, and the number of the transactional requests that the row store bank responds to is more than the number of the analytical requests that the column store bank responds to.
